# EUROPEAN PATENT APPLICATION

(11) **EP 1 033 217 A2**
(43) Date of publication of application: **06.09.2000**
(21) Application number: 00102763.0
(22) Date of filing: 10.02.2000
(51) Int. Cl.: B29B 7/18, B29B 7/46

(54) **Rotor for a mixer and mixer having the same**

(30) Priority: 02.03.1999 JP 5457099
(71) Applicant: KABUSHIKI KAISHA KOBE SEIKO SHO, Kobe-Shi, Hyogo-ken 651-0072 (JP)
(72) Inventor: Inoue, Kimio, Takasago Works in Kobe Steel, Ltd., Takasago-shi, Hyogo 676-0008 (JP); Takakura, Ko, Takasago Works in Kobe Steel, Ltd., Takasago-shi, Hyogo 676-0008 (JP); Yamada, Norifumi, Takasago Works in Kobe Steel,Ltd, Takasago-shi, Hyogo 676-0008 (JP)
(74) Representative: Pellmann, Hans-Bernd, Dipl.-Ing.

(57) **Abstract**

A rotor (4) for a mixer, having a twisted blade (12,13), wherein, in a planarly developed state of the rotor about its axis, the twist angle of the blade (12,13) varies between a start point and a terminal point of the blade so as to give a substantially non-linear developed shape from the start point to the terminal point of the blade. It is possible to take balance efficiently between mixing and dispersion for a material to be mixed which mixing and dispersion are taken charge of by a single blade.

## Description

### BACKGROUND OF THE INVENTION

### (Field of the Invention)

The present invention relates to a rotor for a mixer to be used for mixing polymeric materials such as a plastic material or rubber, as well as batch mixers and continuous mixers (sometimes also called a kneader) having the rotor.

### (Description of the Related Art)

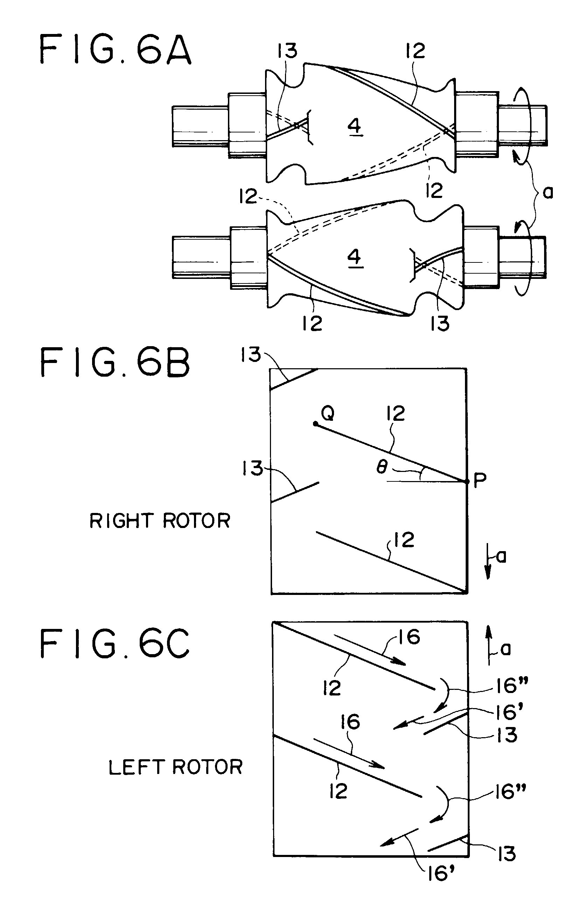

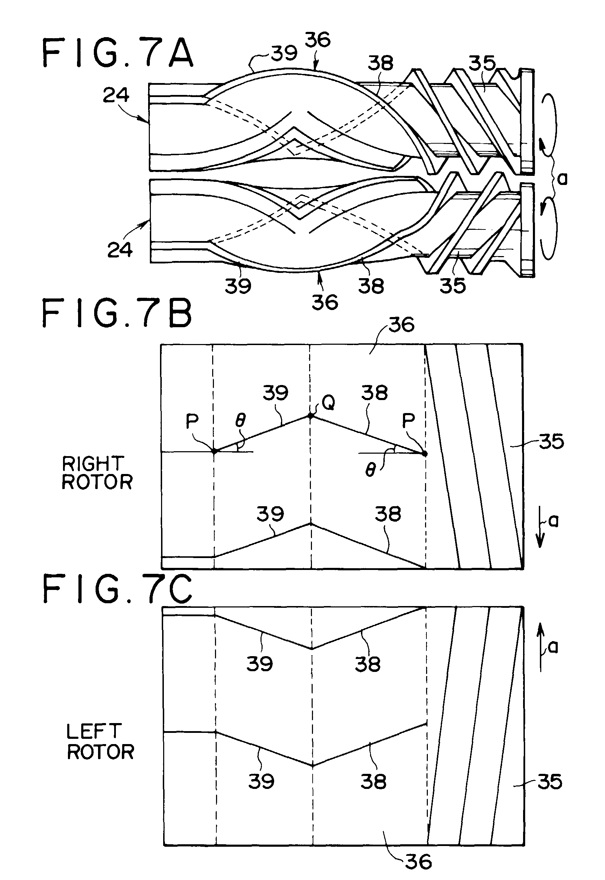

A closed batch mixer suitable for kneading rubber (see, for example, Japanese Patent Publication No. Sho 58-4567, which is hereby fully incorporated by reference) and a continuous mixer which constitutes a mixing/granulating equipment for plastics (see, for example, Japanese Patent Publication No. Sho 58-50533, which is hereby fully incorporated by reference) are known. In these mixers, a strong shearing action is applied to a material to be mixed such as a plastic material or rubber by means of a pair of right and left rotors rotating in different directions within a mixing chamber to plasticize and melt the material to be mixed. By mixing and dispersing various fillers and additives efficiently into the material to be mixed it is possible to produce plastic and rubber products of various qualities. Examples of rotors for use in the above various mixers are shown in FIGS. 6A to 6C and 7A to 7C.

Rotors 4 shown in FIG. 6A, which are used in a batch mixer, are each provided on an outer peripheral surface thereof with long blades 12 and short blades 13 for allowing a material to be mixed to pass through a tip clearance for an inner surface of a mixing chamber and imparting a shearing force thereto.

For creating axial material flows 16 and 16' within the mixing chamber and thereby enhancing the degree of mixing of the material to be mixed, the blades 12 and 13 are cut axially with respect to each other, located at circumferentially displaced positions, and twisted in opposite directions.

On the other hand, rotors 24 shown in FIG. 7A, which are used in a continuous mixer, are each provided on an outer peripheral surface thereof with a feed screw 35 and a mixing portion 36, the feed screw 35 comprising feed blades for conveying a material to be mixed up to a discharge port (the left-hand side in FIG. 7A), the mixing portion 36 comprising feed blades 38 and return blades 39 for allowing the material to pass through a tip clearance for an inner surface of a mixing chamber and imparting a shear force thereto.

The feed blades 38 are twisted in a direction to feed the material to be mixed to the discharge port side, while the return blades 39 are twisted in a direction to return the material to the side opposite to the discharge port. The blades 38 and 39 are joined together so as to be contiguous to each other at a nearly central part of the mixing portion 36. Consequently, the fill rate of the material which has been conveyed by the feed screw 35 is increased by the blades 38 and 39 in the vicinity of that joined portion, so that a strong shear force is exerted on the material.

As to the blades 12, 13, 38 and 39, by enlarging their twist angle θ relative to the axial direction, an axial feed capacity is improved and it is possible to enhance the degree of mixing of the material to be mixed. Conversely, by setting the twist angle θ small, a passage quantity of the material to be mixed for a tip clearance (hereinafter referred to as "material passage quantity") increases and it is possible to increase the degree of dispersion of the material.

In FIGS. 6A to 7C, the symbol "a" stands for a rotational direction of each rotor (also true in the following).

As shown in FIGS. 6B, 6C, 7B and 7C, the conventional rotors 4 and 24 are designed so that, when developed about their axes into a planar state, all of their developed shapes are rectilinear. Therefore, the twist angle of each blade is constant in the range from a start point P to a terminal point Q.

Therefore, it has so far been difficult to take balance between the degree of mixing of the material to be mixed and the degree of dispersion thereof.

For example, in each of the rotors 4 for a batch mixer shown in FIG. 6B, if the twist angle θ of the long and short blades 12, 13 is set large while maintaining their developed shape in a straight-line state, the axial flows 16 and 16' of the material to be mixed become large and it is possible to enhance the degree of mixing of the material, but the material passage quantity in the tip clearance of each of the blades 12 and 13 decreases and so does the degree of dispersion of the material.

Conversely, if the twist angle θ is set small, the material passage quantity in the tip clearance of each blade increases and it is possible to enhance the degree of dispersion of the material, but the axial flows 16 and 16' of the material to be kneaded become small and the degree of mixing of the material decreases.

Also as to the blades 38 and 39 of each rotor 24 for a continuous mixer, even if their twist angle θ is increased or decreased while maintaining their developed shape in a rectilinear state, it is difficult to take balance between mixing and dispersion of the material to be mixed as is the case with the above.

### SUMMARY OF THE INVENTION

It is an object of the present invention to provide a rotor for a mixer capable of efficiently taking balance between mixing and dispersion of a material to be mixed which are taken charge of by one mixing blade and capable of making an appropriate control for making both mixing and dispersion of the material compatible with each other, as well as a mixer using the rotor.

In the rotor according to the present invention, the blade is twisted and, in a planarly developed state of the rotor about the axis thereof, the twist angle of the blade varies between a start point and a terminal point of the blade so as to give a substantially non-linear developed shape from the start point to the terminal point of the blade.

In this case, since the twist angle of each blade changes in the range from the start point to the terminal point of the blade, the twist angle increases at a certain portion of the blade to enhance the degree of mixing, while the twist angle at the other portion decreases to enhance the degree of dispersion, and thus it is possible to efficiently take balance between mixing and dispersion of the material to be mixed which are taken charge of by one blade.

In a rotor for a batch mixer, if the twist angle of at least one of plural blades (say, long and short blades) is varied so as to become smaller gradually from a start point located on an axial end side of the rotor toward a terminal point located on an axially central side thereof, a material flow is generated by the blade portion located on the start point side to enhance the degree of mixing of the material and at the same time a desired material passage quantity in a tip clearance is ensured at the blade portion located on the terminal point side, whereby the degree of dispersion of the material can be enhanced. Thus, there can be conducted an appropriate control capable of making both mixing and dispersion compatible with each other.

In this case, since the twist angle of the start point-side portion located on an end side in the rotor axis direction becomes large, there is attained an additional effect that the sealing performance for a bearing portion between a mixing chamber and the rotor can be improved.

Further, since the twist angle of the central portion in the rotor axis direction becomes small, there also is attained an additional effect that a lumpy material such as rubber can be taken into the mixing chamber more quickly.

If the twist angle of each long blade is varied so as to become smaller gradually from a start point located on an end side in the rotor axis direction toward a terminal point located on a central side in the same direction and thereafter become larger, the material flow is accelerated not only at the start end-side portion of the long blade but also at the end point-side portion thereof, whereby the mixing performance for the material to be mixed can be improved. Thus, it is desirable to do so.

In a rotor for a continuous mixer, also when the twist angle of either feed blades or return blades or both is varies so as to become smaller gradually from a start point on an end side in the rotor axis direction toward a terminal point on a central side in the same direction, a material flow is created by the start point-side portion of each blade concerned to enhance the degree of mixing of the material to be mixed and at the same time a desired material passage quantity is ensured at the terminal point-side portion of the blade, whereby the degree of dispersion of the material can be enhanced. Thus, an appropriate control can be done in which both mixing and dispersion are compatible with each other.

### BRIEF DESCRIPTION OF THE DRAWINGS

FIG. 1A is a plan view of rotors for a batch mixer according to the present invention, and FIGS. 1B and 1C are developed diagrams of the rotors obtained by developing the rotors about their axes;
FIG. 2A is a plan view of rotors for a batch mixer according to the present invention, and FIGS. 2B and 2C are developed diagrams of the rotors obtained by developing the rotors about their axes;
FIG. 3 is a sectional front view of a batch mixer according to the present invention;
FIG. 4A is a plan view of rotors for a continuous mixer according to the present invention, and FIGS. 4B and 4C are developed diagrams of the rotors obtained by developing the rotors about their axes;
FIG. 5 is a sectional side view of a continuous mixer according to the present invention;
FIG. 6A is a plan view of conventional rotors for a batch mixer, and FIGS. 6B and 6C are developed diagrams of the rotors obtained by developing the rotors about their axes; and
FIG. 7A is a plan view of conventional rotors for a continuous mixer, and FIGS. 7B and 7C are developed diagrams of the rotors obtained by developing the rotors about their axes.

### DESCRIPTION OF THE PREFERRED EMBODIMENTS

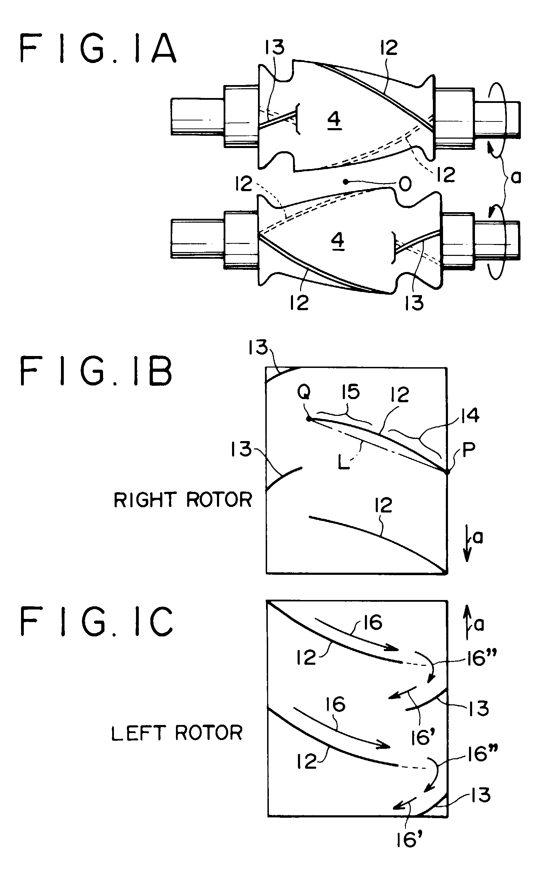

Embodiments of the present invention will be described hereinunder with reference to the accompanying drawings. FIGS. 1A to 3 illustrate the first embodiment of the present invention.

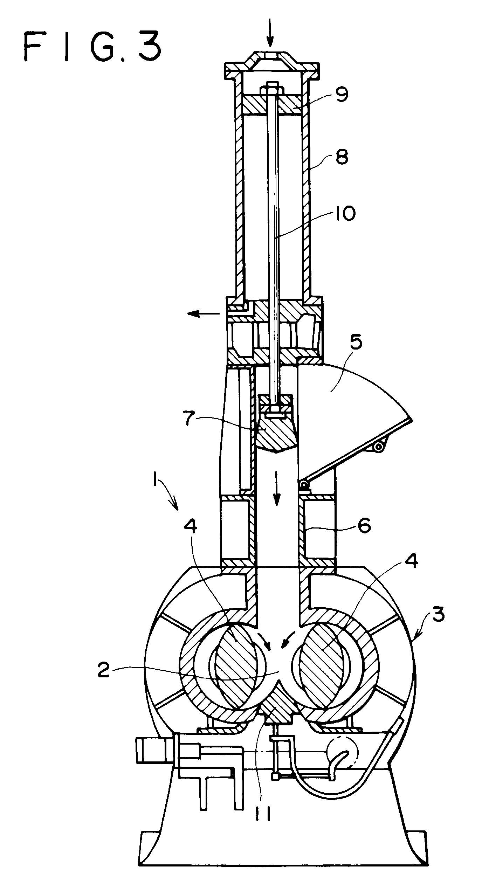

FIG. 3 shows an example of a closed batch mixer 1 which adopts rotors according to the present invention. The mixer 1 is provided with a chamber 3 having a mixing chamber 2 which is in the shape of eyeglasses holes in section, a pair of right and left rotors 4 inserted rotatably into the mixing chamber 2, a material feed cylinder 6 erected on an upper opening of the chamber 3 and equipped with a hopper 5, and a floating weight 7 inserted into the feed cylinder 6 vertically movably.

A pneumatic cylinder 8 is connected to the top of the material feed cylinder 6, and a piston 9 installed in the cylinder 8 is connected to the floating weight 7 through a piston rod 10 which extends in an airtight manner through a lower lid of the cylinder 8. By pressing an upper portion of the pneumatic cylinder 8 and thereby causing the floating weight 7 to move down, a material to be mixed fed from the hopper 5 and present within the material feed cylinder 6 is forced into the chamber 3.

A discharge port formed in the bottom of the chamber 3 is closed by a drop door 11 which is movable vertically. By opening the drop door 11 the material which has been mixed by only a predetermined time within the mixing chamber 2 can be discharged to the exterior of the mixer.

Fig. 1A is a plan view of the paired right and left rotors 4, and FIGS. 1B and 1C are developed diagrams obtained by developing the rotors 4 about their axes into a planar state.

The rotors 4 used in this embodiment are adapted to rotate in directions opposite to each other (arrow "a" directions in FIG. 1A) so that respective opposed inner portions shift downward. Each rotor 4 is provided on an outer peripheral surface thereof with long blades 12 and short blades 13 which are for causing the to-be-mixed material to pass through a tip clearance for the inner surface of the mixing chamber 2 and thereby imparting a shear force to the material.

For creating axial material flows 16 and 16' within the mixing chamber 2 to enhance the degree of mixing of the material, the long and short blades 12, 13 are axially cut with respect to each other located at circumferentially displaced positions, and twisted in directions opposite to each other.

Each rotor 4 used in this embodiment has a two-tip section and has a total of four blades, so each short blade 13 is disposed at a circumferential position displaced by nearly a quarter of a circumference with respect to each long blade 12. In the right and left rotors 4 used in this embodiment, the blades 12 and 13 are arranged in a front-rear replaced manner so as to be in point symmetry with respect to a central point O in FIG. 1A. Each short blade 13 is set at a length about 0.1 to 0.5 times that of each long blade 12.

As shown in FIGS. 1B and 1C, the blades 12 and 13 are each formed so that a developed shape thereof from a start point thereof located on an end side in the rotor axis direction to a terminal point located on a central side in the same direction is a non-linear curved shape, by continuously changing the twist angle so as to become gradually smaller from the start point P toward the terminal point Q.

If reference is made to each long blade 12 as an example, as shown in FIG. 1B, a start point-side portion 14 of the long blade 12 is at an angle larger than the inclination angle of a virtual line L joining the start and terminal points P, Q, while an end point-side portion 15 of the long blade 12 is at an angle smaller than the inclination angle of the virtual line L.

Thus, at the start point-side portion 14 of the long blade 12, the twist angle is larger than in a blade having a developed shaped corresponding to the virtual line L, so that a larger material flow 16 than in the case of the said blade can be created at the portion 14, whereby the degree of mixing of the material to be mixed is enhanced.

On the other hand, at the end point-side portion 15 of each long blade 12, since the twist angle smaller than in the case of the blade having a developed shape corresponding to the virtual line L, a larger material passage quantity in the tip clearance than in the case of the said blade is ensured at the portion 15, whereby the degree of dispersion of the material to be mixed is enhanced.

In each rotor 4, the curved shape of each long blade 12 and the resulting function and effect, both described above, are also true of each short blade 13.

Thus, according to the rotor 4 of this embodiment, both mixing performance and dispersing performance for the material to be mixed can be improved in comparison with the blade (conventional blade) having a developed shape corresponding to the virtual line L joining the start and terminal points P, Q in the shortest distance, and there can be made an appropriate control in which both mixing and dispersion for the material to be mixed are compatible with each other.

According to the rotor 4, moreover, since the twist angle of the start point-side portion 14 located on a rotor axial end side is larger than in the prior art, the material to be mixed is suppressed from being pushed against an axial end face side of the mixing chamber 2, whereby there is attained an additional effect that the sealing performance for a bearing portion between the chamber 3 and the rotor 4 can be improved.

Further, according to the rotor 4, since the twist angle of the central portion in the rotor axis direction is smaller than in the prior art, when a lumpy material to be mixed such as rubber is to be introduced into the mixing chamber 2, the engagement of the material with the blades 12 and 13 is improved, whereby there is attained an additional effect that the material feed time becomes shorter and the productivity can be improved.

Further, in the rotor 4, since the twist angle of the terminal point-side portion 15 of each long blade 12 is small to an extent substantially parallel to the rotor axis, even if the long blade 12 is extended closer to the short blade 13, as indicated with a broken line in Fig. 1C, the passage of a material flow 16" formed by a space between the long and short blades 12, 13 is not so narrowed.

Thus, without deteriorating the mixing performance for the material to be mixed, the dispersing performance for the material can be improved by extending the front end portion of the long blade 12 closer to the short blade 13.

In each rotor 4 shown in FIG. 1A, only one of the long and short blades 12, 13 may be curved, and the concave-convex direction of the curved shape may be made opposite to the illustrated direction.

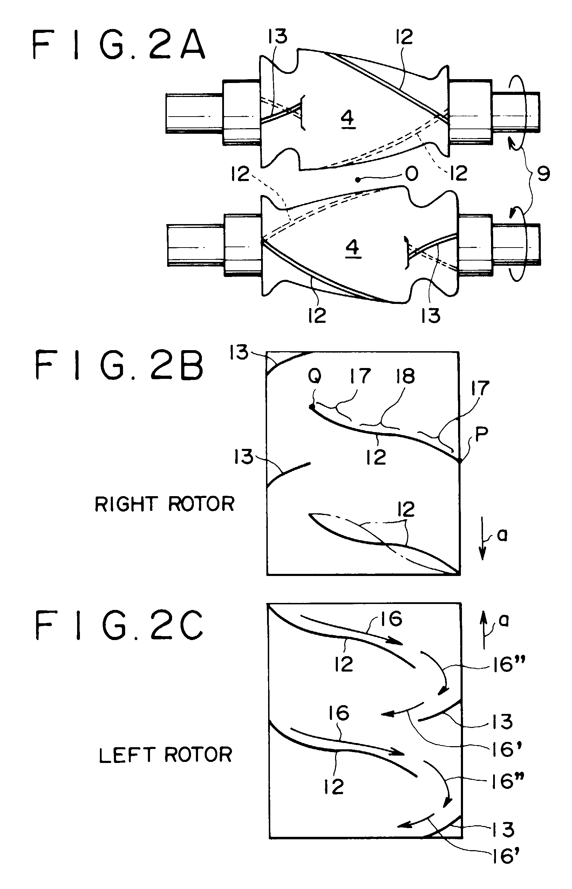

FIG. 2A shows a modification of a pair of right and left rotors 4 used in the above batch mixer 1. In each of the rotors 4, as shown in FIG. 2B, the twist angle of each long blade 12 varies so as to once become smaller gradually from a start point P located on an end side in the rotor axis direction toward a terminal point Q located on a central side m the same direction and thereafter become larger.

That is, a developed shape of the long blade 2 is a generally S shape constituted by a concavely curved portion and a convexly curved portion both contiguous to each other as seen from the central portion of the mixing chamber 2 and having both-end portions 17 of a relatively large twist angle and a central portion 18 of a relatively small twist angle.

Therefore, also in this rotor 4, a material flow 16 is accelerated at the end portion 17 on a start end P side of the long blade 12 having a large twist angle and the material passage quantity in a tip clearance is increased at the central portion 18 where the twist angle is small, whereby the mixing and dispersion of the material to be mixed are improved in a well-balanced state.

In this rotor 4, since the material flow 16 is accelerated also at the end portion 17 located on a terminal point Q side of the long blade 12 where the twist angle is large, it is possible to prevent the material to be mixed from staying in the space between the tip end portions of the long and short blades 12, 13, whereby the material mixing performance can be further improved.

As indicated with a virtual line in FIG. 2B, the developed shape of the long blade 12 may be made into an inverted S shape in which the concave and convex direction of the long blade is opposite to that indicated with a solid line. In this case, the material dispersing performance is ensured at both end portions of the long blade 12 and the material mixing performance ensured at the central portion.

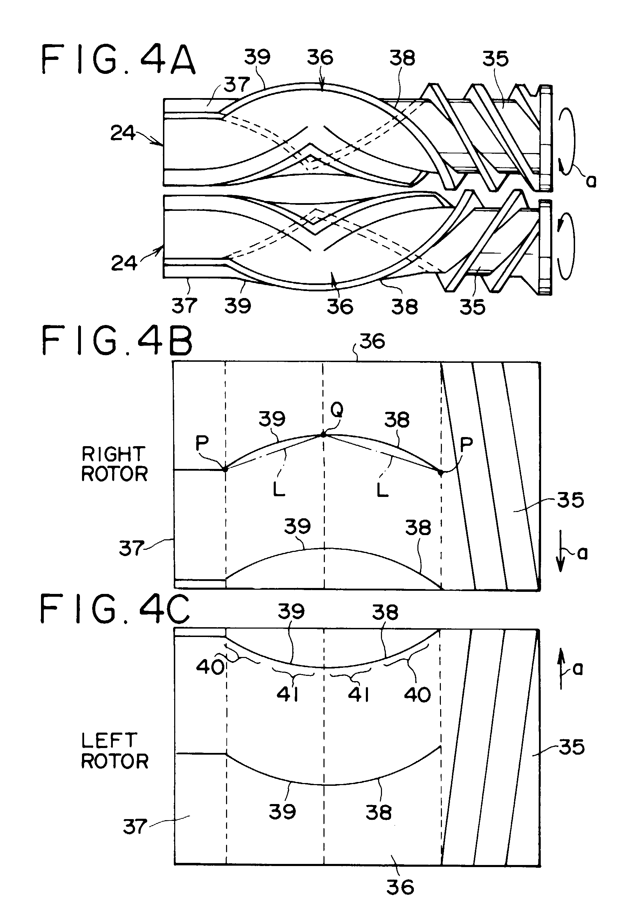

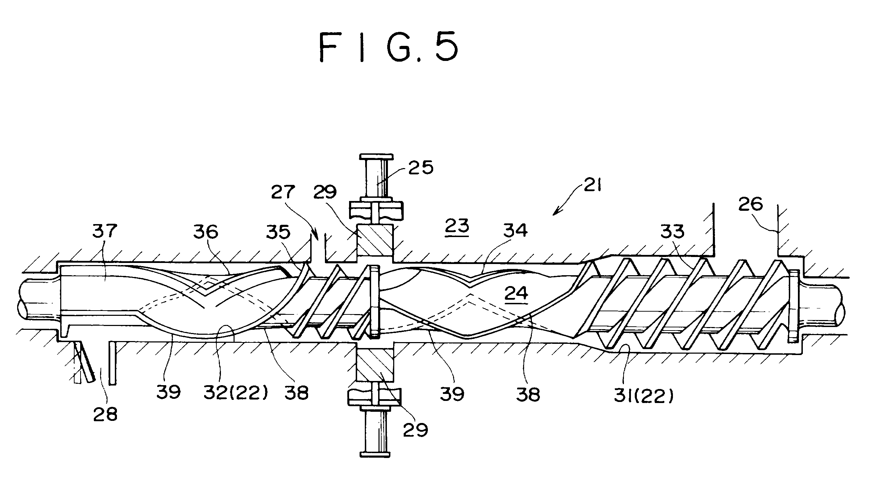

FIGS. 4A to 4C and FIG. 5 illustrate the second embodiment of the present invention.

FIG. 5 shows an example of a biaxial continuous mixer 21 which adopts rotors according to the present invention. The mixer 21 is provided with a chamber 23 having a mixing chamber 22 which is in the shape of eyeglasses holes in section, a pair of right and left rotors 24 inserted rotatably into the mixing chamber 22, and a gate device 25 installed axially centrally of the chamber 23.

On an upper surface side of an upstream end portion of the chamber 23 is provided a feed port 26 for feeding a material to be mixed which is in the form of, for example, a powder or pellets to the mixing chamber 22, with a hopper (not shown) being connected to the feed port 26. In an intermediate portion of the chamber 23 is formed a vent hole 27 for removing a gas which has been mixed into the material at the time of material feed and a gas which has been generated during mixing or for post-addition of additives such as inorganic fillers.

On a lower surface side of a downstream end portion of the chamber 23 is provided a discharge port 28 for discharging the material after mixing, which is in a melted state, to the exterior of the chamber 23. A post-processing apparatus such as a pelletizer is connected to the discharge port 28 through a pressurizing means such as a gear pump or an extruder (neither shown).

At an intermediate position in the material conveying direction of the chamber 23 is provided the gate device 25 which causes a pair of upper and lower gate plates 29 to move toward or away from an outer peripheral portion of each rotor 24 radially from the outside to adjust the flow rate of the material to be mixed. With the gate device 25 as a boundary, the mixing chamber 22 in the chamber 23 is partitioned into two mixing stages consisting of a first stage 31 located on an upstream side and a second stage 32 located on a downstream side.

The rotors 24 are adapted to rotate in directions (arrow "a" directions in FIG. 4A) different from each other so that respective opposed inner portions move downward and are each provided, successively from the upstream side, with a first feed portion 33 and a first mixing portion 34 both positioned in the first stage 31, a second feed portion 35 and a second mixing portion 36 both positioned in the second stage 32, and a discharge portion 37 which is contiguous to the second mixing portion 36 and which comprises parallel blades.

The mixing portions 34 and 36 are for applying a strong shear force to the material to be mixed to mix and melt the material and are each provided with a feed blade 38 which is twisted in a direction to extrude the material to the downstream side with rotation of the rotor and a return blade 39 which is twisted in a direction to push back the material to the upstream side with the said rotation.

The material is mixed in the following manner by the above biaxial continuous mixer 1. First, the material is introduced into the mixer through the feed port 26. Then, in the first stage 31, the material is fed downstream by the first feed portion 33 and undergoes a large shear force when passing through a tip clearance between a tip portion of the first mixing portion 34 and an inner surface of the mixing chamber 22, resulting in that the material melts due to self-heat generation.

Thereafter, the molten resin material, while being adjusted the degree of mixing by the degree of opening of the gate device 25, reaches the second feed portion 35 in the second stage 32, then is conveyed to the second mixing portion 36 by a screw action of the feed portion 35, in which portion 36 the material is further mixed and melted.

The material after mixing which has passed through the second mixing portion 36 is scraped out downward by the succeeding discharge portion 37 and is discharged from the discharge port 28 to the exterior of the chamber 2, then is conveyed to a post-processing apparatus.

FIG. 4A is a plan view of the second mixing portions 36 of the paired right and left rotors 24 and FIGS. 4B and 4C are developed diagrams obtained by developing the second mixing portions 36 about their axes into a planar state.

As shown in FIG. 4A, of the blades 38 and 39 which constitute the second mixing portion 36, the feed blade 38 is twisted in a direction to feed the to-be-mixed material to the discharge port 28 side, while the return blade 39 is twisted in a direction to return the material to the side opposite to the discharge port 28. The blades 38 and 39 are joined together so as to be contiguous to each other nearly centrally of the second mixing portion 36.

In the presence of such feed blade 38 and return blade 39 the material which has been conveyed by the second feed portion 35 is increased its fill rate in the vicinity of the above joined portion, whereby a strong shear force is applied to the material.

In this embodiment the right and left rotors 24 are arranged in a right-left replaced state so that the blades 38 and 39 are arranged axisymmetrically with respect to a transverse central line of the mixing chamber 22. The L/D value of the feed blade 38 and that of the return blade 39 are preset so as to be approximately equal to each other.

As shown in FIGS. 4B and 4C, the twist angle of each of the blades 38 and 39 is varied continuously so as to become smaller gradually from a start point P on an end side in the rotor axis direction toward a terminal point Q on a central side in the same direction, whereby the blades 38 and 39 each assume a non-linear curved shape in its developed state from the start point P to the terminal point Q.

To be more specific, a start point-side portion 40 of each of the blades 38 and 39 is at an angle larger than the inclination angle of a virtual line L joining the start and terminal points P, Q, while a terminal point-side portion 41 of each of the blades 38 and 39 is at an angle smaller than the inclination angle of the virtual line L.

Thus, at the start point-side portion 40 of each of the blades 38 and 39, the twist angle is larger than in the case of a blade having a developed shape corresponding to the virtual line L, so that the material mixing area becomes larger and the degree of material mixing is enhanced.

On the other hand, at the terminal point-side portion 41 of each of the blades 38 and 39, the twist angle is smaller than in the case of a blade having a developed shape corresponding to the virtual line L, a larger material passage quantity than in the case of the said blade is ensured at the portion 41, whereby the degree of material dispersion is enhanced.

Thus, according to the rotor 24, both material mixing performance and dispersing performance can be improved in comparison with that in the use of the blade (conventional blade) having a developed shape corresponding to the virtual line L and there can be made an appropriate control in which both mixing and dispersion for the material are compatible with each other.

In each of the rotors 24 shown in FIG. 4A, only one of the feed blade 38 and the return blade 39 may be curved.

In the second embodiment, also as to the first mixing portion 34, there may be adopted blades 38 and 39 whose twist angle varies in the same manner as the second mixing portion 36. Further, the mixing portion 36 is applicable not only to a twice mixing type continuous mixer but also to a single mixing type continuous mixer not provided with the gate device 25, as well as rotors used therein.

Although embodiments of the present invention have been described above, they are illustrative and not limitative. A technical scope of the present invention is determined by the scope of claims, and all of embodiments falling under that sense are included in the scope of the present invention.

For example, the number of blades in the circumferential direction of each rotor is not limited to two. Three or more blades may be present in the circumferential direction. Likewise, the number of blades arranged separately in the axial direction of each rotor may be three or more. Besides, the present invention is applicable not only to an intermesh type rotor but also to a tangential type rotor, further to a uniaxial type rotor.

Although in each of the above embodiments the twist angle of each blade varies continuously at any axial portion of the blade (a curved developed shape), the twist angle of a blade may vary discontinuously insofar as the blade is recognized as being substantially non-linear in a developed shape thereof from its start point to terminal point.

That is, the "substantially non-linear" as referred to herein indicates a state in which a developed state of a single blade having both start and terminal points is a slightly bypassed shape in the circumferential direction when seen from a straight line of the shortest distance extending from the start to the terminal point. The bypass may be a curved line or a polygonal line.

A rotor for a mixer, having a twisted blade, wherein, in a planarly developed state of the rotor about its axis, the twist angle of the blade varies between a start point and a terminal point of the blade so as to give a substantially non-linear developed shape from the start point to the terminal point of the blade. It is possible to take balance efficiently between mixing and dispersion for a material to be mixed which mixing and dispersion are taken charge of by a single blade.

## Claims

1. A rotor for a mixer, comprising a blade formed on an outer peripheral surface of said rotor, said blade being twisted relative to a rotor axis direction, wherein, in a planarly developed state of the rotor about the axis thereof, the twist angle of said blade varies between a start point and a terminal point of said blade so as to give a substantially non-linear developed shape from said start point to said terminal point of said blade.

2. A rotor for a batch mixer, comprising a plurality of blades formed on an outer peripheral surface of said rotor, said blades being twisted relative to a rotor axis direction, wherein, in a planarly developed state of said rotor about the axis thereof, the twist angle of at least one of said blades varies between a start point and a terminal point of the blade so as to give a substantially non-linear developed shape from said start point to said terminal point of the blade.

3. A rotor for a batch mixer according to claim 2, wherein the twist angle of at least one of said blades varies so as to become smaller gradually from a start point of the blade located on an end side in the rotor axis direction toward a terminal point located on a central side in said direction.

4. A rotor for a batch mixer according to claim 3, wherein the twist angle of at least one of said blades once becomes smaller gradually from said start point toward said terminal point and thereafter becomes larger.

5. A rotor for a continuous mixer, comprising:
a feed blade formed on an outer peripheral surface of said rotor so as to be twisted relative to a rotor axis direction;
a return blade formed on the outer peripheral surface of the rotor so as to be twisted relative to said rotor axis direction,
wherein, in a planarly developed state of said rotor about the axis thereof, the twist angle of one or both of said feed blade and said return blade varies between a start point and a terminal point of the blade or blades so as to give a substantially non-linear developed shape from said start point to said terminal point of the blade or blades.

6. A rotor for a continuous mixer according to claim 5, wherein the twist angle of one or both of said feed blade and said return blade varies so as to become smaller gradually from a start point located on an end side in the rotor axis direction toward a terminal point located on a central side in said direction.

7. A mixer comprising:
a chamber having a mixing chamber; and
the rotor described in any of claims 1 to 6, said rotor being inserted into said mixing chamber rotatably and having on its outer peripheral surface a blade which is twisted relative to the rotor axis direction,
wherein a material to be mixed is allowed to pass through a tip clearance formed between an inner surface of said mixing chamber and a top portion of said blade and a shear force is thereby exerted on said material.

8. A rotor for a mixer, inserted rotatably into a mixing chamber so as to form a tip clearance between a top portion of a blade and an inner surface of said mixing chamber, said blade being formed on an outer peripheral surface of said rotor and twisted relative to a rotor axis direction, with a material to be mixed being allowed to pass through said tip clearance and a shear force thereby exerted on said material,
characterized in that, in a planarly developed state of the rotor about the axis thereof, the twist angle of said blade varies between a start point and a terminal point of said blade so as to give a substantially non-linear developed shape from the start point to the terminal point of said blade.
